# EUROPEAN PATENT APPLICATION

(11) **EP 2 189 929 A1**
(43) Date of publication of application: **26.05.2010**
(21) Application number: 09175797.1
(22) Date of filing: 12.11.2009
(51) Int. Cl.: G06Q 10/00

(54) **Popup window for error correction**

(30) Priority: 14.11.2008 US 271713
(71) Applicant: SAP AG, 69190 Walldorf (DE)
(72) Inventor: Wendel Andreas, 64401 Groß-Bieberau (DE); Bahembera Karambizi Eric, 68775 Ketsch (DE); Nuxoll Frank, 69151 Neckargemünd (DE)
(74) Representative: Richardt, Markus Albert

(57) **Abstract**

Techniques for providing error handling for a configured user interface (UI) which is generated based upon a configuration of a UI template. A set of one or more data variables is identified, wherein the one or more data variables are associated with a violation of a condition of an enterprise resource planning (ERP) system. In an embodiment, popup window data is dynamically generated based on the identified set of one or more data variables, the popup window data describing UI elements to include in a popup window. In another embodiment, a popup window is displayed which provides access to a data variable which by virtue of a configuration of the UI is not accessible in a current view of the UI.

## Description

### Field of the invention

Embodiments of the invention relate generally to the software arts. More particularly, embodiments of the invention relate to providing error handling for a configured user interface (UI).

### Background and prior art

Integrated business computing systems such as enterprise resource planning (ERP) systems often have a large number and variety of operational constraints which variously proscribe and/or prescribe conditions by which business system data is to be accessed by a user. These operational constraints may come from any of a variety of sources including, but not limited to, business rules, computer system configurations, user roles, network protocols and/or constraints specific to a particular business transaction. Applications to access business system data may use one or more error handling routines, method calls, etc. to enforce a constraint on how data is accessed. However, other mechanisms for enforcing these operational constraints may also be distributed throughout a business computing system. In addition, the conditions by which business system data is to be accessed according to a given operational constraint may change over time. For developers creating applications to access such business system data, the implementation of error handling for these applications is complicated by the variety and dynamic nature of these operational constraints.

Enterprise technologies increasingly enable a user, such as a business analyst or a system administrator, to configure a computer application program that was developed by a commercial software developer for sale to many business enterprises. One example of such customization is the customization of a user interface (Ul). Providing configurability of a UI is complicated by the need to have error handling code which correctly enforces operational constraints associated with the access of data via the UI. For example, allowing a user to choose a configuration which excludes accessibility from a configured Ul (or from a particular view thereof) may affect an ability to access the data variable when error handling code identifies an error related to the data variable. To properly meet error handling needs, a developer may include in a configurable application program all possible error handling code, including error handling code which is not relevant to the particular UI configuration chosen by a user. This may lead, for example, to the configured application having error handling routines which are unnecessarily large and slow in execution. Alternatively, a developer may write a unique set of relevant error handling code for each possible UI configuration of an application which a user may select. Such an approach may be very inefficient, however, in cases where each set of relevant error handling code needs to be kept up to date with changes to operational constraints and/or UI configurability. Such an approach may also be inefficient insofar as many possible UI configurations may never be selected for use. Therefore, for a configurable UI of an application operating in an integrated business computing systems such an ERP system, existing techniques for implementing error handling are inefficient at least in terms of development and/or runtime execution.

A related problem is the complexity of operational constraints implemented by many ERP systems in order to ensure the validity of all system states and business processes and to ensure the consistency of entered or edited data. The need to apply multiple complex validation routines after business data has been changed or entered to the system de novo often conflicts with the wish to use small, lightweight user interfaces displaying only the minimum number of input fields required to sufficiently specify a business operation. Lightweight Uls are not only less demanding regarding the time for a computer to process and display the visual UI elements on a screen. Even more importantly, lightweight Uls having only few input fields accelerate the input of data, e.g. the entry of sales orders into the ERP system of a company via a UI element, because the user is not confused and distracted by the complexity of input options. Lightweight Uls comprising only few input fields also reduce the number of possible error sources and the amount of data transferred between the data input device and the data storage device which may, depending on the implementation of the system, be located on different machines.

### Brief description of the drawings

The various embodiments of the present invention are illustrated by way of example, and not by way of limitation, in the figures of the accompanying drawings and in which:
- **FIG. 1**: is a block diagram illustrating select elements of a configuration of a UI template according to an embodiment.
- **FIG. 2**: is a block diagram illustrating select elements of a dynamic popup window generator according to an embodiment.
- **FIG. 3**: is a block diagram illustrating select elements of an ERP system according to an embodiment.
- **FIG. 4**: is a swim lane diagram illustrating select elements of a data exchange according to an embodiment.
- **FIG. 5**: is a diagram illustrating select elements of a configured UI according to an embodiment.
- **FIG. 6**: is a flow diagram illustrating select operations in a method according to an embodiment.
- **FIG. 7**: is a block diagram illustrating select elements of a computing device according to an embodiment.

### Detailed description

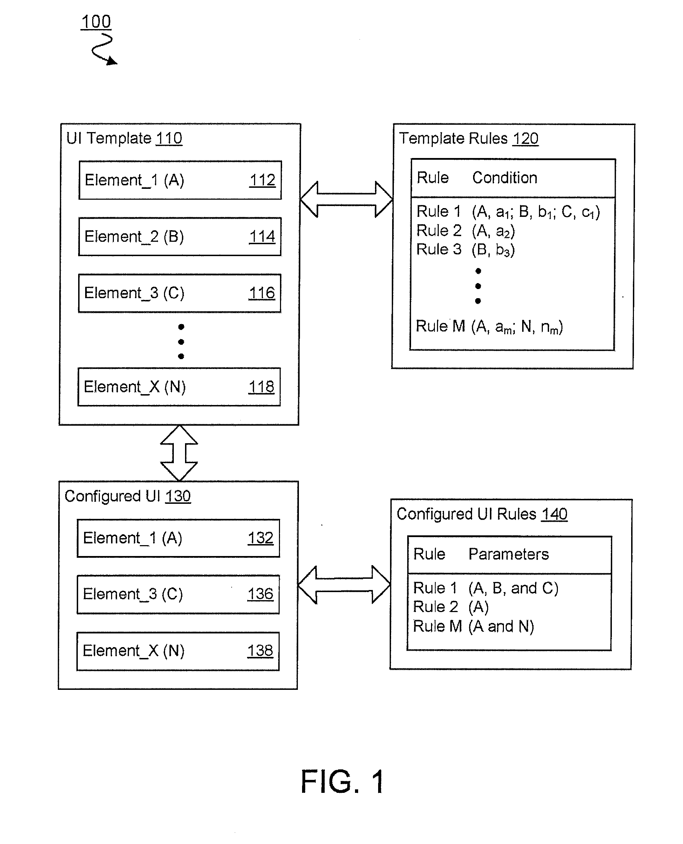

FIG. 1 illustrates select elements of a configuration 100 of a UI template 110 according to various embodiments of the invention. As used herein, a UI template is understood to refer to a set of elements which include or refer to respective user interface resources having functionalities which are selectable to be included as, or otherwise determine, functionalities of a configured UI. The configuration 100 may determine various characteristics of elements of the UI template 110 which may be used to access data of an ERP system. More particularly, a selected configuration of elements of the UI template 110 may be used to generate a configured UI 130 by which a user may access the ERP system. For example, UI template 110 may include a set of configurable UI elements, e.g. Element_1 112, Element_2 114, Element_3 116,..., Element_X 118. A UI element may include, for example, any of a variety of graphical UI (GUI) elements - including, but not limited to, buttons, menus, toolbars, menus, tabs, and/or views - which are presentable to a user, e.g. in a display monitor. In an embodiment, the UI elements of UI template 110 may include any of a variety of data input elements - e.g. a check box, radio button, slider, list box, spinner, drop-down list, combo box, text box, etc. - which can be included in a configured UI 130 to allow a user to select or otherwise enter a value to be submitted as input for an application. In certain embodiments, various additional or alternative combinations of configurable UI elements may be included in the UI template 110. As used herein, a configurable UI element of a UI template is understood to be configurable at least insofar as a type of functionality of the UI element may be selected for inclusion in or exclusion from configured UI 130, for example. Additionally, UI template 110 may include one or more non-configurable elements (not shown) which, for example, correspond to functionality which a user cannot change in and/or exclude from a configured UI.

In an embodiment, the configuration 100 of UI template 110 to generate configured UI 130 may include configuring a computer application (not shown) for use in a particular business enterprise. The computer application may include instructions that, when executed, cause transaction data to be processed or otherwise accessed in a manner that is applicable to one or more business enterprises. For configuration 100, configuration information needed for determining a functionality of configured UI 130 may be provided by a user and identified. The configuration information may determine a configuration parameter attribute to control operation of the computer application. The value for a configuration attribute may be stored in one of multiple entries of configuration information.

In an embodiment, a configurable UI element of UI template 110 may be mapped to or otherwise associated with a data variable of the ERP system. The implementation of this mapping may for example comprise the mapping of the UI elements to ERP data variables via a table in a database or the integration of the mapping in the source code of the software ("hard coded mapping"). This association may allow a user to get and/or set a value of a data variable, e.g. via a functionality of its associated configurable UI element in the configured UI 130. These data variables may, for example, represent or otherwise relate to any of a variety of aspects of the ERP system including, but not limited to, business restrictions and/or requirements, system administration/configuration, sales orders, purchasing requests and/or employee information. In addition, a data variable with which a given configurable UI element is associated may be a parameter of an operational constraint of the ERP system. Enforcement of the constraint may determine whether and/or how a user is to access certain ERP information such as the data variable. Such operational constraints of the ERP system may be represented in and/or enforced by various different mechanisms of ERP system 100.

By way of illustration, Element_1 112, Element_2 114, Element_3 116,..., Element_X 118 may be associated, respectively, with data variables A, B, C,..., N of an ERP system. In various embodiments, UI elements of UI template 110may have any of a variety of additional or alternative associations with data of the ERP system. Data variables A, B, C,..., N may variously constitute parameters of M operational constraints of the ERP system, for example. Although the individual operational constraints may be stored, enforced or otherwise implemented by various respective mechanisms of the ERP system 100, the M constraints of the ERP system are illustrated generically in FIG. 1 as a set of M template rules 120. More particularly, the M template rules 120 represent operational constraints of an ERP system which have as parameters data variables associated with configurable UI elements of UI template 110. A rule therefore enforces a condition an ERP system must met to keep consistent. Each rule comprises one or multiple conditions applied on data vari-variables, the data variable conditions being logically connected with each other within one rule, e.g. by the Boolean AND or OR operator.

Each rule in template rules 120 enforces a respective condition which itself can include logical combinations of one or more conditions specific to respective data variables. By way of illustration, Rule 1 of template rules 120 enforces the condition that data variable A conforms to data variable condition a1, that data variable B conforms to data variable condition b1, and that data variable C conforms to data variable condition c1. Rule 2 of template rules 120 enforces the condition that data variable A conforms to condition a2. Rule 3 of template rules 120 enforces the condition that data variable B conforms to condition b3. Rule M of template rules 120 enforces the condition that data variable A conforms to condition am and that data variable N conforms to condition nm. Any of a variety of additional or alternative rules and/or conditions can be included in template rules 120 according to various embodiments. The individual conditions specific to respective data variables - e.g. a1, b1, c1, a2, b3, am or nm - may variously proscribe and/or prescribe the assignment of certain data types, data values and/or data ranges to the respective data variable. Although the illustrative conditions of template rules 120 each include a logical ANDing of various combinations of conditions specific to respective data variables, it is understood that an operational constraint of the ERP system may enforce a condition which includes any of a variety of combinations of logical operations (AND, OR, NOR, NAND, etc.) performed on individual conditions specific to respective data variables.

Configured UI 130 may be created based on a configuration 100 of UI template 110, which may include selecting a configuration of configurable UI elements of UI template 110. The generation of configured UI 130 may be performed by a server (not shown) of the ERP system, e.g. based on configuration instructions provided from a client (not shown) of the ERP system. For example, a system administrator, business analyst or other user may provide configuration instructions - e.g. via a UI configuration tool - to selectively include, remove, hide, lock or otherwise define an accessibility of a functionality of one or more configurable UI elements. Alternatively or additionally, configuration instructions may define a layout of a functionality of a configurable UI element - e.g. that a particular UI element functionality is to be included in a particular region of a view of configured UI 130, and/or that a particular UI element functionality is to be included only in a subset of multiple views of configured UI 130.

By way of illustration, configuration information may indicate that various functionalities of Element_1 132, Element_3 136 and Element_X 138 - which correspond respectively to functionalities of Element_1 112, Element_3 116 and Element_X 118 - are selected for inclusion in (or are not selected for exclusion from) configured UI 130. These configuration instructions may result in the exclusion of all access to a functionality of a given UI element - e.g. Element_2 114 - from the configured UI 130. In various embodiments, any of a variety of additional or alternative configurations of configured UI 130 may be included in the ERP system 100.

In an embodiment, the configuration 100 of UI template 110 may include turning on/off functionalities of an instance of UI template 110 to implement the configured UI 130. For example, selecting a configuration of UI template 110 may include an application instance building a list of, or otherwise tracking, select configurable functionalities to be provided to a client by the application instance. In another embodiment, selecting a configuration of UI template 110 may correspond to passing parameters for the instantiation of an object of a class of objects to which the UI template 110 belongs. In still another embodiment, selecting a configuration of UI template 110 may correspond to the selection of various routines, scripts, software modules, rules or other code and/or data for inclusion in (or for exclusion from) a compiling, linking and/or other processing which generates an application to implement the configured UI 130. The selective inclusion/exclusion of code elements allows the creation of a relatively "lightweight" application to implement a configured UI 130 which is tailored for use by a particular client and which has a relatively lower data processing load during execution. In an embodiment, an application implementing the configured UI 130 may be distributed to a client of the ERP system for local execution by a user. Alternatively, an instance of the application implementing the configured UI 130 may be implemented on a server system of the ERP system and accessed by a user- e.g. over a network via a client-side browser.
The selective inclusion/exclusion of functionality of UI template 110 in configuration 100 may have implications for the error handling to be performed by an application, module, object, etc. implementing configured UI 130. For example, an inclusion within configured UI 130 (or a particular view thereof) of only certain configurable UI elements (e.g. Element_1 132, Element_3 136 and Element_X 138) and their respective functionalities to access only certain data variables (e.g. data variables A, C and N) may mean that only a subset of template rules 120 are relevant to - e.g. capable of being violated as a result of - user interaction with configured UI 130 (or the particular view thereof). As a result, only a subset of template rules 120 may be relevant to error handling by the application, module, object instance, etc. implementing configured UI 130. Therefore, the selected configuration 100 may make it unnecessary or redundant to include certain error handling code in the implementation of configured UI 130. An example of such a subset of template rules 120 is illustrated generically as configured UI rules 140 which may include, for example, Rules 1, 2 and 4 of template rules 120 having as data parameters data variables A, C and N accessible via configured UI 130. In an embodiment, for a rule in template rules 120 to be one of configured UI rules 140, it may be sufficient that the rule has as a parameter a data variable accessible by configured UI 130.

In addition, error handling by the application, module, object instance, etc. implementing configured UI 130 may further be affected by an exclusion from configured UI 130 of functionality to access a data variable which is a parameter of one or the configured UI rules 140. For example, although Rule 1 of configured UI rules 140 may be violated via configured UI 130 - e.g. by improper access to data variables A and/or C - Rule 1 may include a parameter, such as data variable B, which is made inaccessible in configured UI 130 by the configuration 100 of UI template 110. In some cases where an operational constraint is violated by user interaction via configured UI 130, it may be preferable or even necessary to access such an inaccessible parameter instead of, or in addition to, a parameter which is accessible in configured UI 130. Therefore, the selected configuration 100 may require alternate error handling techniques to make available data variables which by virtue of the configuration 100 is not accessible by a configurable UI element in configured UI 130. Alternately or additionally, alternate error handling techniques may be helpful to provide access to a data variable which by virtue of the configuration 100 are not accessible in a current view of configured UI 130, e.g. to avoid compelling a user to navigate through one or more other views of the configured UI 130 to access the data variable not configured to be accessible in the current view.

The following use case scenario of the embodiment of the invention depicted in figure 1 shall help to clarify how the error handling according to the present invention can be used in praxis: a company selling household articles owns a large warehouse having stored for each type of offered goods a multitude of items. The company runs an online shop providing registered users with the possibility to submit purchase orders online via a web form. The web form is configured and connected to the ERP system as described in the previous paragraphs. The purchase orders are forwarded to the company's ERP system comprising a multitude of predefined business workflows and rules, a database wherein the available goods, the purchase orders and customer profiles are stored. The ERP system also comprises various rules which are applied on any data entered to the system before they are stored to the database to ensure consistency of the business data. During the last three years, the company managed to organize the goods in its stock in a way that 98% of all ordered goods could be taken from the stock and did not have to be ordered from a supplier. Therefore the company guarantees its customers on a page of the online shop a delivery time of one week. The web form provided to the customers, which is forwards entered data to the ERP system of the company, is small and comprises only a few fields for entering data, e.g. for entering the ID or name of the ordered goods and the ordered item number. The web form does not comprise any fields for entering the desired or the latest acceptable delivery data as all goods are assumed to be in stock and to be deliverable within one week. The ERP system, however, evaluates each purchase order before it is accepted and stored to the database. It thereby considers constraints applied on the input fields, e.g. the constraint that all product IDs entered by the customer have to be comprised in the product list in the database. In addition, other constraints are evaluated which are not represented by a particular input field of the web form. The ERP checks, for example, if all items ordered for a particular product type are indeed in stock. Only if the entered product IDs are valid and all ordered items are in stock and can indeed be delivered within one week the ERP accepts the purchase order, stores the order to a database and returns a confirmation of the received purchase order to the customer. In case at least one ordered item should be out of stock, a popup window is provided to the user, enabling the user e.g. to change the composition of the purchase order or to accept a later delivery time.

The household articles shop example illustrates that according to the embodiment of the invention depicted in figure 1 it is possible to combine multiple beneficial UI construction principles in one and the same system: it provides a method for flexible, modular UI construction comprising also the flexible, modular association of complex business logic rules and consistency checks of an ERP system to the configured UI. In spite of the complexity of the integrated consistency checks and UI elements, the resulting configured Uls presented to the users are lightweight and can be reduced to the minimum complexity still sufficient to support execute a particular business task.

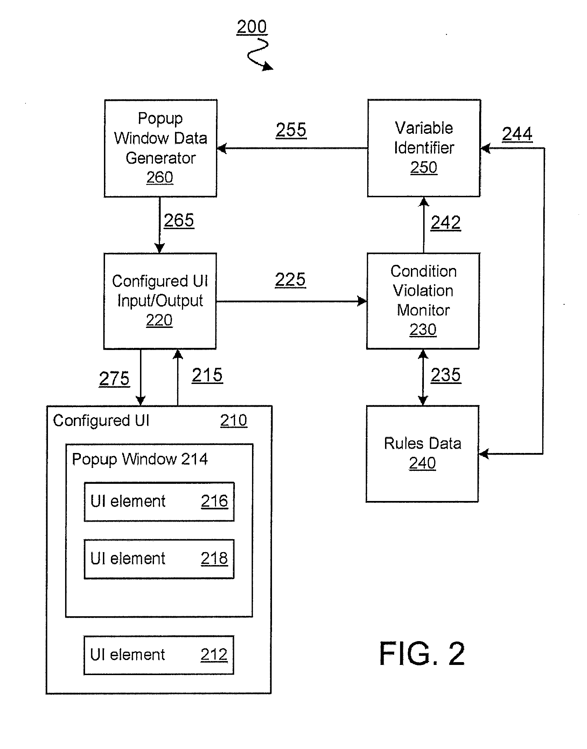

FIG. 2 illustrates select elements of a dynamic popup window generator 200 to implement a configured UI 210. In an embodiment, the configured UI 210 may represent configured UI 130. In an embodiment, some or all elements of dynamic popup window generator 200 may be implemented by an instance of executing software in an application server of an ERP system. In another embodiment, some or all elements of dynamic popup window generator 200 may be implemented by an application executed by a client system to access services of a server system in the ERP system.

Dynamic popup window generator 200 may display to a user a configured UI 210 including one or more UI elements such as a UI element 212, for example. Configured UI 210 may be based on a selected configuration of a UI template (not shown) having configurable UI elements, wherein a functionality of a configurable UI element is configured for inclusion in the configured UI 210 - for example, as UI element 212. UI element 212 may be mapped to or otherwise associated with a data variable of the ERP system - e.g. wherein the value of the associated data variable is accessible to a user via the UI element 212. The data variable associated with UI element 212 may be a parameter for one or more conditions of the ERP system.
During operation of dynamic popup window generator 200, a user may select or otherwise provide a data value in UI element 212, which results in an input 215 being sent from configured UI 210 to a configured UI input/output (I/O) 220. UI I/O220 may include a software routine, method call, object, thread, or similar program logic to convert input received via a UI into application data for further processing, and/or to execute a display of the UI, including a display of its various component UI elements, in response to data from other software processes indicating changes to the display of the UI. In an embodiment, the configured UI I/O 220 may determine that input 215 represents a request to set the data variable associated with UI element 212 to a particular data value. In response to input 215, configured UI I/O 220 may generate a message 225 indicating to a condition violation monitor 230 the data variable associated with UI element 212 and the requested value to be assigned to the data variable. Condition violation monitor 230 may include a process, thread, routine, state machine or other logic to determine whether an assignment of a value to a data variable associated with a UI element - e.g. UI element 212 - would or does result in a violation of a condition of the ERP system. For example, condition violation monitor 230 may access information - illustrated as rules data 240 in a memory device - and test various conditions of the ERP system in order to determine any condition violations. Rules data 240 may be accessed via one or more memory devices and/or means for providing information 235 describing an operational constraint of an ERP system and/or a condition thereof.

Based on information 235, condition violation monitor 230 may identify one or more violated conditions which would result from the assignment of the requested value to the data variable associated with UI element 212. Condition violation monitor 230 may then generate a message 242 to indicate the identified one or more conditions. Message 242 may be sent to a variable identifier 250, which may include a process, thread, routine, state machine or other logic to determine a set of parameters associated one or more conditions which would be or are violated by an assignment of the requested value to the data variable associated with UI element 212. For example, parameter information 244 may be provided, e.g. from rules data 240, and referred to for determining a set of data variables of the ERP system which relate to avoiding or resolving a violation of the one or more conditions of the ERP system. Alternatively or in addition, such parameter information 244 may be retrieved from a source of data other than that providing information 235. In an embodiment, determining a set of data variables may include variable identifier 250 selecting for representation in a popup window one or more data variables associated with respective parameters - e.g. indicated in parameter information 244 - of conditions indicated in information 242. For example, variable identifier 250 may select for representation a data variable based on whether it is a parameter for multiple conditions indicated in message 242. Alternatively or in addition, variable identifier 250 may select a data variable for representation based on any of a variety of other criteria, including but not limited to a priority of an operational constraint, a priority of a parameter, a user authorization, etc.

Variable identifier 250 may provide to a popup window data generator 260 an indication 255 of the selected data variables associated with the violation of the first condition of the ERP system. Based on the indication 255, popup window data generator 260 may dynamically generate and provide to configured UI I/O 220 popup window data 265 which describes a popup window 214 to be generated. Popup window data generator 260 may include any of a variety of processes, threads, routines or other logic to dynamically generate, based on an identified set of one or more data variables, information describing a popup window to provide access to the one or more data variables. In an embodiment, popup window data 265 may describe a popup window in a markup language such as an Extensible Markup Language (XML) or a HyperText Markup Language (HTML). Dynamically generating popup window data 265 may include identifying a UI element to represent a selected data variable described in indication 255. For example, popup window data generator 260 may determine that a data variable described in indication 255 is associated with a particular configurable UI element of a UI template corresponding to configured UI 210. Popup window data generator 260 may then use information associated with the particular configurable UI element to select a corresponding configuration of a UI element to be included in the popup window data. The information associated with the particular configurable UI element may, for example, include a set of allowable values to populate the UI element (e.g. a list box) with for selection by a user in the popup window.

The provided popup window data 265 received from popup window generator 260 may be used by configured UI I/O 220 to display a popup window 214, e.g. over a current view of the configured UI 210. For example, UI I/O 200 may generate output 275 - e.g. by executing an exception instruction - to display the described popup window 214 in the configured UI 210. The displayed popup window 214 may include one or more UI elements 216, 218. One or more of UI elements 216, 218 may be associated with, and provide access to, respective EPR system data variables which, by virtue of the configuration of configured UI 210, are not accessible in configured IO 210, or are at least not accessible in a current view of the configured UI 210. In an embodiment, the UI elements 216, 218 of popup window 214 may allow a user to select or otherwise enter information to correct or avoid a violation of a condition of the ERP system. For example, a user may change a value of a data value otherwise not accessible in the configured UI 210, or which may otherwise only be accessed by the user navigating to another view of the configured UI 210.

In an embodiment, popup window data generator 260 and configured UI I/O 220 may operate in a configured UI component of an application instance implementing configured UI 210. Such an application instance may further include, for example, one or more of condition monitor 230, variable identifier 250 and rules data 240. Alternatively, one or more of condition monitor 230, variable identifier 250 and rules data 240 may be implemented by other resources (e.g. objects, applications, servers, databases) of an ERP system, which are available to the application instance to implement configured UI 210. Where one or more of condition monitor 230, variable identifier 250 and rules data 240 are included in an application instance implementing configured UI 210, the application instance may avail of additional ERP resources which provide, for example, services corresponding to operations of condition monitor 230, variable identifier 250 and/or rules data 240. These additional resources of the ERP system may allow the application instance to extend its own dynamic popup window generation mechanisms to enforce operational constraints represented elsewhere in the ERP system.

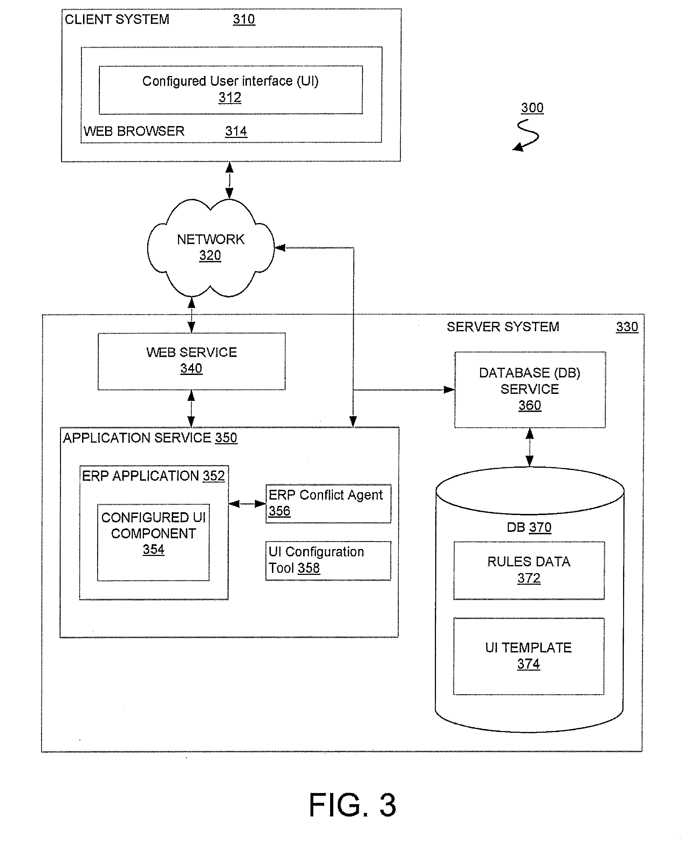

FIG. 3 illustrates select elements of an ERP system 300 to implement a configured UI 312 according to an embodiment of the invention. ERP system 300 may include a client system 310 to communicate with a server system 330 over a network 320. Examples of the network 320 include the Internet, wide area networks (WANs), local area networks (LANs), or any other wired or wireless network. Server system 330 may include any of a variety of combinations of component servers or server systems to variously provide services of the ERP system 300 to the client system 310. For example, server system 330 may include a web service to provide client system 310 access to ERP services. Server system 330 may also include an application service 350 to implement one or more applications, e.g. ERP application 352. Additionally or alternatively, server system 330 may include a database service 360 to provide an application of application service 350 with access to information about the ERP, e.g. in a database (DB) 270). In various embodiments, server system 330 may include any of a variety of additional or alternative services.

Client system 310 may include a workstation, personal computer or other data processing system having logic to generate or process UI data describing a configured UI to be displayed. In an embodiment, a client computer may store a configured UI application which executes locally to generate code describing a configured UI, including the configured UI application communicating with server system 330 to access data which may determine aspects of the display of configured UI 312. In an alternate embodiment illustrated in FIG. 3, web browser 314 displays a configured UI 312 described with data generated and provided by a configured UI component 354 of ERP application 352. Configured UI component 354 may include, for example, popup window data generator 260 and configured UI I/O 220. The web browser 314 may be a standard browser, e.g. Microsoft Internet Explorer or Firefox. The web browser may also be any other application comprising the functionality of a browser, in particular, to display HTML pages properly (interpret HTML and CSS tags) and send data entered by the user into configured Uls represented as HTML forms (submit HTML requests).

In an embodiment, an ERP application 352 - e.g. implementing some or all of dynamic popup window generator 200 - may be generated based on a selection of a configuration of a UI template. For example, a system administrator or other user may access a UI configuration tool 358 to selectively include in (or exclude from) configured UI 312 functionalities corresponding to functionalities of various UI elements of UI template 374. Based on the selected configuration of UI template 374, a configured UI component 354 may be included in application 352 which generates data describing the configured UI 312 to be displayed.

During operation of ERP application 352, popup window information may be dynamically generated which describes a popup window to display, e.g. over a view of configured UI 312. For example, the popup window may be dynamically generated in response to a user request, received via configured UI 312, requesting that a data variable of ERP system 300 be assigned to a particular value. Additionally or alternatively, the popup window may be dynamically generated in response to a change of state of ERP system 300 - e.g. independent of any user input via configured UI 312.

In response to a user request and/or a change of state of ERP system 300, ERP application 352 may determine that, for a given state of ERP system 300, an assignment of a particular value to a data variable would result in or otherwise contribute to a violation of a condition of ERP system 300 for which the data variable is a parameter. In response to determining that a violation of a condition of ERP system 300 is associated with the data variable, ERP application 352 may initiate a process to generate popup window data for presentation in configured UI 312. In an embodiment, ERP application 352 may include business logic (not shown) describing conditions of the ERP system. Additionally or alternatively, ERP application 352 may access other resources of server system 330 to retrieve information related to possible and/or actual violations of operating constraints of ERP system 300. For example, application service 350 may include an ERP conflict agent 356 - i.e. a process, thread, routine or other software logic to maintain, retrieve, or otherwise provide access to information describing operational constraints of ERP system 300 and/or the state of parameters of said operational constraints. The information describing operational constraints and/or parameters thereof are illustrated functionally in FIG. 3 as rules data 372. Although rules data 372 and UI template 374 are both illustrated as being stored in DB 370, it is understood that such information may be maintained in any of a variety of combinations of additional or alternative ERP system resources according to different embodiments.

Based on the available information related to one or more conditions of ERP system 300, ERP application 352 may collect from various resources of server system 330 information identifying one or more conditions whose actual (or potential) violation relates to a data variable accessible via user interface 312. ERP application 352 may process this information to generate a list of data variables which are parameters of the identified one or more conditions. ERP application 352 may further select from the generated list of data variables those data variables which are to be represented in a popup window for display in a view of configured UI 312. Based on those selected data variables, configured UI component 354 may dynamically generate popup window data describing a popup window to be displayed in configured UI 312.

For example, configured UI component 354 may identify one or more UI elements to be described in the dynamically generated popup window data, each of the one or more UI elements to access a respective one of the selected data variables. In an embodiment, a popup window is displayed in configured UI 312 according to the dynamically generated popup window data, whereby a user may select or otherwise provide to a UI element of the popup window a data value to which a represented data variables is to be set.

According to one embodiment of the invention, the conflict agent 365 in operation may for example detect a violation of rule 1 depicted in figure 1. As rule 1 comprises conditions regarding the data variables A, B and C, the UI elements 112, 114 and 116 associated with to those data variables may be selected and used by the conflict agent to specify the popup window to be displayed.

According to a further embodiment of the invention whose core architecture is also depicted in figure 3, the client system 310 is a notebook, desktop computer or smartphone being connected to the Internet or the intranet of a company via a network interface, e.g. an Ethernet card, a WLNA adapter, a PCMCIA or UMTS adapter and the like. The client machine runs a web browser 314. The browser may be a standard browser such as Firefox or Internet Explorer accessing HTML pages presented by the web service 340 of the server system 330. According to this scenario, the HTML pages are typically presented within the portal of the company owning the ERP system. The web browser could, however, also be any other software being operable to interpret and render HTML tags. In case the web browser 314 is not a standard browser but an additional software component of the ERP system installed on the client machine, the browser 314 may comprise additional business routines and logic required by the browser to interoperate with the business logic hosted on the server side. The server is a server machine running an application service 350. The application service 350 comprises an ERP system, e.g. an ERP system of a company used to monitor and execute business processes. The web browser 314 in operation may request the display of a particular configured UI, e.g. an HTML form for entering a purchase order, via the submission of URL parameters (name/value pairs) added to a service URL address pointing to the web service 340 running on the server system. The URL could look like http://shopservice.com/erp-system/gui?guinumber=23423. The term "web service" 340 is not confined to Web Services in the narrow sense of the word. Rather, "web service" 340 refers to any computer implemented service making the applications provided by the application service 350 accessible via a network. According to this implementation example, the web service 340 receives an HTML request submitted by the web browser 314 when submitting the requested service URL. The URL comprises parameters specifying a particular configured UI corresponding e.g. to the input form for entering purchase orders to the ERP system. The web service 314 evaluates the request and passes the parameter specifying the requested configured UI to the ERP application 352 hosted by the application service 350. The ERP system returns the configured UI corresponding to the HTTP request to the web service 340 via the application service 350. The web service returns an HTML stream to the client, the HTML stream being rendered in the web browser 314 as html page comprising a purchase order input form.

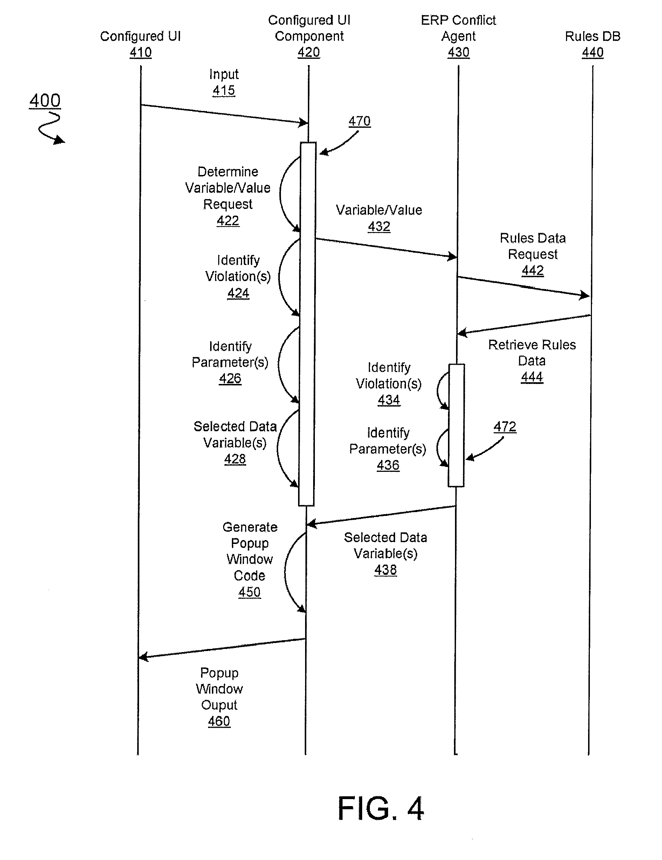

FIG. 4 illustrates select elements of a transaction 400 to dynamically generate popup window data according to an embodiment of the invention. In an embodiment, transaction 400 may take place in a system such as ERP system 300, for example. Transaction 400 may include various exchanges between a displayed configured UI 410, a configured UI component 420 of an application implementing configured UI 410, an ERP conflict agent 430 and a repository of information describing an operational constraint of an ERP system, represented as Rules DB 440. In an embodiment, configured UI component 420 may include select elements of dynamic popup window generator 200. Additionally or alternatively, ERP conflict agent 430 may include ERP conflict agent 356.

In implementing configured UI 410, configured UI component 420 may dynamically generate popup window code describing a popup window to be displayed over a view of configured UI 410. A user may provide via configured UI 410 an input 415 to request, for example, that a data variable of an ERP system be assigned to a particular data value. In response to the input 415, configured UI component 420 may, at 422, determine the data variable and value which are associated with the request. Configured UI component 420 may, at 424, determine actual or potential violations of one or more conditions which are related to the requested assignment of the value to the data variable. Information describing these one or more conditions may then be used by configured UI component 420 to identify, at 426, one or more parameters of these one or more conditions. The identified one or more parameters can be used by configured UI component 420 to select a set of data variables to be represented in (e.g. made accessible via) a popup window may be selected, at 428.
In addition to, or as an alternative to, a local determining 470 by configured UI component 420 of a set of data variables to be represented in a popup window, other resources of the ERP system can be accessed by configured UI component 420 to identify any additional data variables to be represented in the popup window. For example, configured UI component 420 may provide to an ERP conflict agent 430 an indication 432 of a data variable and value which relates to the input 415 provided via the displayed configured UI 410. Based on indication 432, ERP conflict agent 430 may retrieve, either locally or from some other remote ERP resource, any other data related to potential or actual violations of conditions of the ERP system. One illustration of such a retrieval of this data includes ERP conflict agent 430 sending to a rules DB 440 a rules data request 442. In response to the rules data request 442, the rules DB 440 may provide, at 444, rules data - e.g. information identifying or otherwise describing an operational constraint of the ERP, a current or potential violation thereof and/or a state of a parameter thereof. ERP conflict agent 430 may process rules data 444 to identify any violations of conditions of the ERP, at 434 (if such violations are not already identified in rules data 444) and/or identify one or more parameters associated with such violations, at 436. From these identified parameters, ERP conflict agent 430 may then provide to configured UI component 420 an indication 438 of any selected data variables to be represented in a popup window. It is understood that in certain embodiments, ERP conflict agent 430 may merely forward the retrieved rules data 444 to configured UI component 420 - e.g. without ERP conflict agent 430 performing the processing 472 to identify parameters to be represented in the popup window. It is also understood that in certain embodiments, configured UI component 420 may directly access - e.g. independent of ERP conflict agent 430 - a remote repository such as Rules DB 440 to retrieve rules data for processing in the local determining 470.

Based on the data variables selected locally by configured UI component 420 and/or the data variables retrieved via a remote ERP resource such as ERP conflict agent 430, configured UI component 420 may dynamically generate popup window code 450 describing a popup window to be displayed in a view of the configured UI 410. The popup window may include one or more UI elements by which a user is invited to select or otherwise provide a value to set a data variable. In an embodiment, an assignment of a data variable to a value via the popup window may avoid or resolve a violation of a condition of the ERP system.

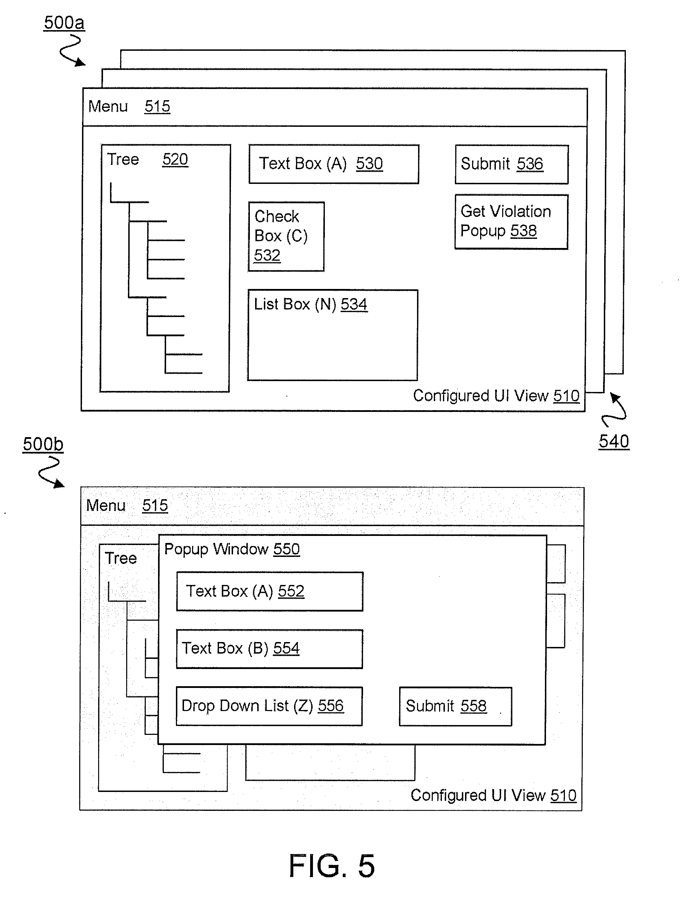

FIG. 5 illustrates select elements of different displays 500a and 500b of a configured UI according to an embodiment of the invention. Displays 500a and 500b may be displays of configured UI 210, for example, which are presented at different times during an execution of an application implementing the configured UI. In an embodiment, display 500a may include configured UI view 510 - e.g. one of a set of views 540 which may be variously presented to a user over time based on the user's interaction with the configured UI. Configured UI view 510 may be based on a selected configuration of a UI template (not shown). For example, configured UI view 510 may include various UI elements - e.g. a menu 515, a tree view 520, a text box 530, a check box 532, a list box 534, a submit button 536 and/or a get violation popup button 538 - which each correspond to functionality which was selected from the UI template to be included in (or not excluded from) the configured UI. It is understood that any of a variety of additional or alternative types and/or combinations of UI elements may be included in configured UI view 510 according to the techniques described herein.

Various UI elements of configured UI view 510 may be assigned, mapped or otherwise correspond to respective data variables of an ERP system. For example, text box 530, check box 532 and list box 534 may be assigned to, and allow a user access to, data variables A, C and N, respectively. These data variables may include parameters of one or more conditions that represent operating constraints of the ERP system. In response to a user input via the configured UI view 510, popup window data may be dynamically generated which describes a popup window 550 to be displayed 500b in the configured UI. Dynamically generating the popup window data may include identifying UI elements to include in the popup window for providing to a user access to data variables selected for representation in the popup window 550. In various embodiments, a user may select or otherwise provide a data value in a UI element of popup window 550 and request - e.g. via submit button 558 - that a corresponding data variable be assigned the data value to help avoid or otherwise resolve a particular violation of an ERP system condition.

The selected configuration for the configured UI may have excluded, or not included, accessibility in configured UI view 510 to a data variable which is accessible through a UI element of the popup window 550. Moreover, the selected configuration for configured UI may have selectively excluded, or not included, accessibility in any of the views 540 to a data variable which is accessible via a UI element of the popup window 550. Additionally or alternatively, the popup window 550 may provide access to a data variable which is neither accessible nor selectable for accessibility via the UI template used to generate the configured UI. For example, a configured UI component of an ERP application may retrieve from remote resources of the ERP system an indication that an operational constraint of the ERP system enforces a violated condition which has as parameters a first data variable selectable for accessibility in the UI template, and a second data variable which is not so selectable. The configured UI component of the ERP application may then describe in dynamically generated popup window data a UI element which allows access to this second data variable.

By way of illustration, text box 552 of popup window 550 may provide access to the data variable A which is accessible through a configured text box 530 of the configured UI view 510. Additionally or alternatively, popup window 550 may include a text box 554 to provide access to a data variable B. In an embodiment, the configuration of configured UI view 510 may have been particularly selected to exclude an available accessibility to data variable B which is provided by the UI template. Furthermore, the respective configurations of all views 540 may have been particularly selected to exclude this available accessibility to data variable B. Accordingly, dynamically generated popup window 550 may allow a user to correct or avoid a condition violation by accessing a data variable which had previously been selected to be inaccessible by the user - e.g. inaccessible in the current view of the configured UI and/or in all views 540 of configured UI. Additionally or alternatively, popup window 550 may include a drop down list 556 to provide access to a data variable Z, where no functionality in the UI template can be configured to access data variable Z. Data variable Z may be, for example, a parameter of a condition retrieved from a remote data rules repository. Accordingly, dynamically generated popup window 550 may allow a user to correct or avoid a condition violation by accessing a data variable which was neither selected nor selectable for access by the user through any configurable UI element of the UI template.

In an embodiment of the invention, popup window 550 may be presented automatically in response to a user submitting a request by selecting a submit button 536 of configured UI view 510. Submit button 536 may result in the user request being automatically serviced providing no conditions of the ERP system are violated. Alternately or in addition, a get violation popup button 538 may be presented or otherwise made accessible to a user in response to a condition violation being detected. The get violation popup button 538 may allow a user to trigger a display of the popup window 550 to review parameters related to the violated condition and/or provide input to avoid or resolve the violated condition.

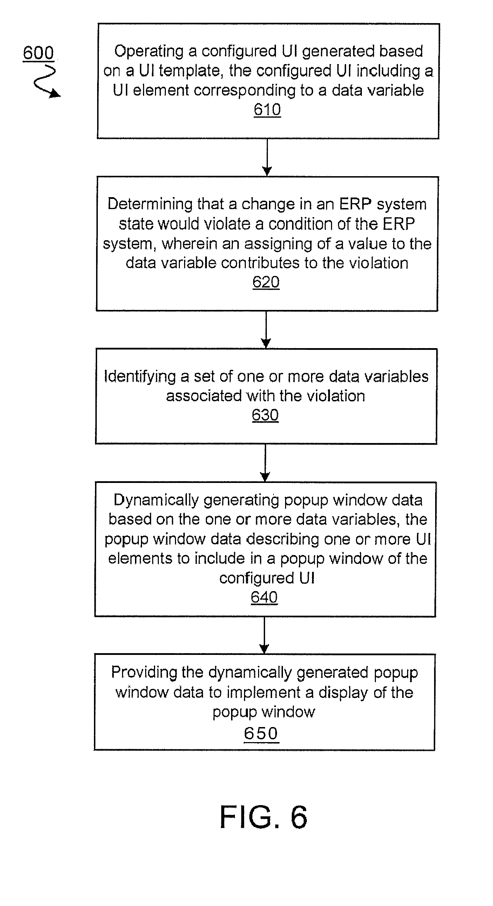

FIG. 6 illustrates select elements of a method 600 for dynamically generating a popup window according to an embodiment of the invention. In an embodiment, method 600 may be performed by a dynamic popup window generator 200. Method 600 may include, at 610, operating a configured UI generated based on a UI template of an enterprise resource planning (ERP) system. The configured UI may include a first UI element selected from a plurality of configurable UI elements of the UI template, where the first UI element corresponds to a first data variable. For example, a functionality of the first UI element may be selectable and/or otherwise configurable to be included in the configured UI to access the first data variable. During the operating of the configured UI, a first determination may be made, at 620, that a change in a state of the ERP system (e.g. a requested assignment of a particular value to a data variable) would result in a violation of a first condition of the ERP system, wherein an assignment of a first value to the first data variable contributes to the violation of the first condition. In response to the first determination, a set of one or more data variables may be generated or otherwise identified, at 630, which are associated with the violation of the first condition of the ERP system. Based on the identified set of one or more data variables, popup window data may be dynamically generated, at 640, which describes one or more UI elements to include in a popup window of the configured UI. In an embodiment, each of the one or more UI elements correspond to a data variable in the identified set of one or more data variables. The dynamically generated popup window data may then be provided, at 640, to implement a display of the popup window of the configured UI.

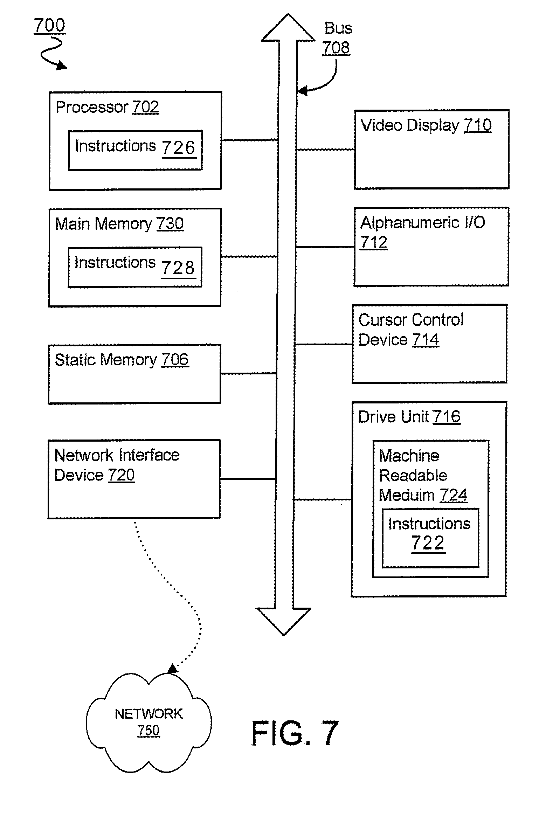

FIG. 7 illustrates select elements of an exemplary form of a computer system 700 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The exemplary computer system 700 may include a processor 702 (e.g., a central processing unit (CPU), a graphics processing unit (GPU) or both), a main memory 704 and a static memory 706, which communicate with each other via a bus 708. The computer system 700 may further include a video display unit 710 (e.g., a liquid crystal display (LCD) or a cathode ray tube (CRT)) to implement displays generated according to techniques set forth herein. The computer system 700 may also include an alphanumeric input device 712 (e.g., a keyboard), a user interface (UI) navigation device 714 (e.g., a mouse), a disk drive unit 716 and/or a network interface device 720.

The disk drive unit 716 may include a machine-readable medium 724 on which is stored one or more sets of instructions and data structures (e.g., software 722) embodying or utilized by any one or more of the methodologies or functions described herein. The software 722 may also reside, completely or at least partially, within the main memory 704 and/or within the processor 702 during execution thereof by the computer system 700, the main memory 704 and the processor 702 also constituting machine-readable media. The software 722 may further be transmitted or received over a network 726 via the network interface device 720 utilizing any one of a number of well-known transfer protocols (e.g., HTTP).

While the machine-readable medium 724 is shown in an exemplary embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing or encoding a set of instructions for execution by the machine and that cause the machine to perform any one or more of the methodologies of the present invention, or that is capable of storing or encoding data structures utilized by or associated with such a set of instructions. The term "machine-readable medium" shall accordingly be taken to include, but not be limited to, solid-state memories, optical and magnetic media, etc.

Techniques and architectures for dynamically generating popup window data are described herein. In the above description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the description.
Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed descriptions herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, the present invention is not described with reference to any particular programming language. It will be appreciated that a variety of programming languages may be used to implement the teachings of the invention as described herein.

Besides what is described herein, various modifications may be made to the disclosed embodiments and implementations of the invention without departing from their scope. Therefore, the illustrations and examples herein should be construed in an illustrative, and not a restrictive sense. The scope of the invention should be measured solely by reference to the claims that follow.

### List of reference numerals

- 100: configuration
- 110: UI template
- 112: configurable UI element
- 114: configurable UI element
- 116: configurable UI element
- 118: configurable UI element
- 120: Template Rules
- 140: configured UI rules
- 200: dynamic popup window generator
- 210: configured UI
- 212: UI element
- 214: popup window
- 215: input
- 216: UI element
- 218: UI element
- 225: message
- 230: element
- 235: information
- 240: element
- 242: message
- 244: parameter information
- 250: element
- 260: element
- 265: popup window data
- 275: output
- 300: ERP system
- 310: client system
- 312: configured UI
- 314: web browser
- 320: network
- 330: server system
- 340: web service
- 350: application service
- 352: ERP application
- 356: ERP conflict agent
- 358: UI configuration tool
- 360: database service
- 370: database
- 372: rules data
- 374: UI template
- 410: configured UI
- 415: Input
- 420: configured UI component
- 422: step
- 424: step
- 426: step
- 428: step
- 430: ERP conflict agent
- 432: step
- 434: step
- 436: step
- 438: step
- 440: rules database
- 442: step
- 450: step
- 460: step
- 470: step
- 472: step
- 500a: display
- 500b: display
- 510: configured UI view
- 515: menu
- 520: tree view
- 530: textbox
- 532: check box
- 534: list box
- 536: submit button
- 540: set of views
- 550: popup window
- 552: text box
- 554: text box
- 556: drop down list
- 558: submit button
- 600: method
- 610: step
- 620: step
- 630: step
- 640: step
- 650: step
- 700: computer system
- 702: processor
- 706: static memory
- 710: video display
- 712: input/output
- 714: cursor control device
- 716: drive unit
- 722: instructions
- 724: machine readable medium
- 730: main memory
- 750: network

## Claims

1. A computer implemented method comprising:
○ operating (600) a configured user interface (UI) (130),
■ wherein the configuration of the UI comprises the selection of a subset of UI elements from a UI template (110) of an enterprise resource planning (ERP) system, the selection of a subset of rules from a rules template (120) of the ERP system, the assignment of the subset of rules to the configured UI (130), the configured UI comprising the subset of UI elements (132, 136, 138),
■ wherein the UI template (110) comprises a plurality of configurable UI elements,
■ wherein the rules template (120) comprises a plurality of rules of the ERP system,
■ wherein each UI element corresponds to a data variable of the ERP system, and
■ wherein each rule enforces a respective condition of the ERP system, each rule comprising and logically connecting one or multiple data variable conditions that have to be met by each respective data variable of the ERP system;
○ during the operating of the UI, making a first determination (620) that a change in a state of the ERP system would result in a violation of a first condition of the ERP system, wherein an assignment of a first
○ value to a first data variable contributes to the violation of a first condition;
○ in response to the first determination, identifying (630) a set of one or more data variables causing the violation of the first condition;
○ generating (640) popup window data specifying one or more UI elements to include in a popup window of the configured UI (130), each of the one or more UI elements corresponding to a respective data variable in the set of one or more condition violating data variables, the generated popup window being the result of an evaluation of the identified set of condition violating data variables; and
○ providing (650) the generated popup window data to implement a display of the popup window of the configured UI, the display to invite a user input for resolving the violation of the first condition of the ERP system.

2. The computer implemented method of claim 1, further comprising the step:
○ receiving, via a view of the configured UI, a request to assign the first value to the first data variable;
wherein making the first determination comprises determining that the requested assignment of the first value to the first data variable would result in the violation of the first condition of the ERP system.

3. The computer implemented method of claim 2, wherein the one or more UI elements of the popup window comprises a UI element (216) to access a data variable not accessible by any UI element in the view of the configured UI (210).

4. The computer implemented method of claim 3, wherein the data variable not accessible by any UI element in the view of the configured UI comprises a data variable not accessible by any user configured UI element of the UI.

5. The computer implemented method of claim 4, wherein the data variable not accessible by any user configured UI element of the configured UI comprises a data variable not associated with any configurable UI element of the UI template used for creating the configured UI.

6. The computer implemented method of claim 1, wherein generating the popup window data comprises selecting for access via the popup window only a subset of the identified set of one or more data variables associated with the violation of the first condition of the ERP system.

7. The computer implemented method of claim 6, wherein the first determination further comprises a determination that the change in the state of the ERP system would further result in a violation of a second condition of the ERP system, and wherein selecting the subset of the identified set of one or more data variables comprises selecting a second data variable only if the second data variable is a parameter of both the first condition and the second condition.

8. The computer implemented method of claim 1, wherein identifying one or more data variables associated with the condition of the ERP system comprises identifying parameters from the subset of the set of rules.

9. A system comprising:
○ a client machine to display a view of a configured user interface (UI) (130) comprising one or multiple UI elements (132, 136, 138),
■ wherein the configuration of the UI comprises the selection of a subset of UI elements from a UI template (110) of an enterprise resource planning (ERP) system, the selection of a subset (140) of rules from a rules template (120) of the ERP system, the assignment of the subset of rules to the configured UI comprising the subset of UI elements ,
■ wherein the UI template comprises a plurality of configurable UI elements (112- 118),
■ wherein the rules template comprises a plurality of rules of the ERP system,
■ wherein each UI element corresponds to a data variable of the ERP system,
■ wherein each rule enforces a respective condition of the ERP system, each rule comprising and logically connecting one or multiple data variable conditions that have to be met by each respective data variable of the ERP system;
■ wherein the client machine further is operable to display a popup window of the configured UI, the popup window being specified by dynamically generated popup window data describing one or more UI elements to include in the popup window, the displayed popup window to receive a user input for resolving a violation of an enterprise resource planning (ERP) condition, wherein the first data variable is a parameter of the ERP condition; and
○ a server machine connected to the client machine via a network, the server machine to provide to the client machine ERP data associated with the displaying of the popup window of the UI.

10. The system of claim 9, wherein providing to the client machine ERP data associated with the displaying of the popup window of the UI comprises providing the dynamically generated popup window data.

11. The system of claim 9, wherein providing to the client machine ERP data associated with the displaying of the popup window of the UI comprises providing data identifying a violated condition of the ERP system.

12. The system of claim 9, wherein the one or more UI elements comprises a UI element (216) to access a data variable not accessible by any UI element in the view of the UI.

13. A machine-readable storage medium having stored thereon instructions which, when executed by one or more processors, causes a machine to perform a method comprising:
○ operating (600) a configured user interface (UI),
■ wherein the configuration of the UI comprises the selection of a subset of UI elements from a UI template (110) of an enterprise resource planning (ERP) system, the selection of a subset of rules from a rules template (120) of the ERP system, the assignment of the subset of rules to the configured UI comprising the subset of UI elements,
■ wherein the UI template comprises a plurality of configurable UI elements (112-118),
■ wherein the rules template comprises a plurality of rules of the ERP system,
■ wherein each UI element corresponds to a data variable of the ERP system, and
■ wherein each rule enforces a respective condition of the ERP system, each rule comprising and logically connecting one or multiple data variable conditions that have to be met by each respective data variable of the ERP system;
○ during the operating of the configured UI, making a first determination (620) that a change in a state of the ERP system would result in a violation of a first condition of the ERP system, wherein an assignment of a first value to the first data variable contributes to the violation of the first condition , wherein the ERP system comprises a set of rules each enforcing a respective condition of the ERP system, wherein the plurality of configurable UI elements of the configured UI template each correspond to a respective data variable which is a parameter of a rule in the set of rules, and wherein generating the configured UI comprises selecting a subset of the set of rules and creating an application to implement the configured UI, the application comprising the selected subset of the set of rules,
○ in response to the first determination, identifying (630) a set of one or more data variables being associated with the violation;
○ generating (640) popup window data specifying one or more UI elements to include in a popup window of the configured UI, each of the one or more UI elements corresponding to a respective data variable in the set of one or more condition violating data variables, the generated popup window being the result of an evaluation of the identified set of data variables violating the condition; and
○ providing (650) the generated popup window data to implement a display of the popup window of the configured UI, the display to invite a user input for resolving the violation of the first condition of the ERP system.

14. The machine-readable medium of claim 13, the method further comprising:
○ receiving, via a view of the UI, a request to assign the first value to the first data variable,
wherein making the first determination comprises determining that the requested assignment of the first value to the first data variable would result in the violation of the first condition of the ERP system.

15. The machine-readable medium of claim 14, wherein the one or more UI elements comprises a UI element (216) to access a data variable not accessible by any UI element in the view of the configured UI.

16. The machine-readable medium of claim 15, wherein the data variable not accessible by any UI element in the view of the configured UI comprises a data variable not accessible by any user configured UI element of the UI.

17. The machine-readable medium of claim 16, wherein the data variable not accessible by any user configurable UI element of the UI comprises a data variable not associated with any configurable UI element of the UI template used for creating the configured UI.

18. The machine-readable medium of claim 17, wherein generating the popup window data comprises selecting for access via the popup window only a subset of the identified set of one or more data variables associated with the violation of the first condition of the ERP system.

19. The machine-readable medium of claim 17, wherein the ERP system comprises a set of rules each enforcing a respective condition of the ERP system, wherein the plurality of configurable UI elements of the UI template each correspond to a respective data variable which is a parameter of a rule in the set of rules, and wherein generating the UI comprises
○ selecting a subset of the set of rules, and
○ creating an application to implement the UI, the application comprising the selected subset of the set of rules.
